# EUROPÄISCHE PATENTSCHRIFT

(11) **EP 3 041 663 B1**
(45) Veröffentlichungstag und Bekanntmachung des Hinweises auf die Patenterteilung: **26.12.2018**
(21) Anmeldenummer: 14766106.0
(22) Anmeldetag: 26.08.2014
(51) Int. Cl.: B29C 65/10, B65B 7/14, B65B 51/20, B65D 35/00, B29L 23/20

(54) **ERWÄRMVORRICHTUNG ZUM ERWÄRMEN DER RÄNDER DER EINFÜLLÖFFNUNG EINER TUBE**
HEATING DEVICE FOR HEATING THE EDGES OF THE FILL OPENING OF A TUBE
DISPOSITIF DE CHAUFFAGE DES BORDS DE L'ORIFICE DE REMPLISSAGE D'UN TUBE

(30) Priorität: 02.09.2013 DE 102013014484
(43) Veröffentlichungstag der Anmeldung: 13.07.2016
(73) Patentinhaber: IWK Verpackungstechnik GmbH, 76297 Stutensee (DE)
(72) Erfinder: STOLL, Philipp, 75203 Königsbach-Stein (DE); ZAILER, Jürgen, 75045 Walzbachtal (DE); GATZKE, Roland, 76356 Weingarten (DE)
(74) Vertreter: Lichti - Patentanwälte Partnerschaft mbB
(86) Internationale Anmeldenummer: PCT/EP2014/002325
(87) Internationale Veröffentlichungsnummer: WO 2015/028144

(56) Entgegenhaltungen:
- WO-A1-2009/105016
- JP-A- 2003 321 012

## Beschreibung

Die Erfindung betrifft eine Erwärmvorrichtung zum Erwärmen der Ränder der Einfüllöffnung einer aus einem einzelnen rohrförmigen Tubenkörper bestehenden Tube mittels Heißgas, mit einer Heißgasdüse, die einen in einen Innenraum des Tubenkörpers einbringbaren 1. Düsenabschnitt aufweist, der einen 1. Heißgaskanal mit zumindest einem 1. Heißgasauslass besitzt, der innerhalb des Innenraums des Tubenkörpers anordbar ist und mittels dessen Heißgas auf die Innenwandung des Tubenkörpers aufbringbar ist.

In einer Tubenfüllmaschine werden Tuben, die üblicherweise aus Kunststoff oder einem Laminat bestehen, durch verschiedene Arbeitsstationen geführt und in diesen gefüllt und verschlossen. Zum Verschließen der Tube wird die Wandung des rohrförmigen Tubenkörpers im Bereich der oberen Einfüllöffnung soweit erwärmt, dass das Material des Tubenkörpers aufschmilzt oder zumindest so weich wird, dass die Tube mit Hilfe von außenseitig auf dem Tubekörper einwirkenden und das Tubenende zusammendrückenden Klemmbacken verschlossen bzw. verschweißt werden kann.

Um das Material des Tubenkörpers zu erwärmen, besitzt eine entsprechende Erwärmvorrichtung eine Heißgasdüse, die in den Innenraum des Tubenkörpers einbringbar ist. Nach dem Einbringen der Heißgasdüse in den Innenraum des Tubenkörpers wird über einen Heißgaskanal ein heißes Gas und insbesondere Heißluft zugeführt und mittels eines Heißgasauslasses auf die Innenwandung des Tubenkörpers aufgeblasen, wodurch die Tubenwandung aufschmilzt. Eine entsprechende Erwärmvorrichtung ist in der DE 37 44 402 C2 beschrieben.

Das am Heißgasauslass abgegebene Heißgas durchströmt die Erwärmvorrichtung und wird aus dieser anschließend abgeführt. Nach dem Erwärmen der Wandung des Tubenkörpers wird diese in üblicher Weise zusammengedrückt und die Tube somit verschlossen.

Eine Tubenfüllmaschine muss Tuben unterschiedlichen Materials und auch unterschiedlicher Tubenwandstärke in gleicher Weise verarbeiten. Da die Zykluszeit in einer modernen Tubenfüllmaschine, d.h. die Zeit, die für die ausreichende Erwärmung der Tubenwandung zur Verfügung steht, sehr gering ist, treten bei bestimmen Tubenarten Probleme auf, das Tubenmaterial gleichmäßig und ausreichend zu erwärmen, um eine sicheres Verschließen der Tube zu gewährleisten. Um diese Probleme zu lösen, müsste man die Zykluszeit erhöhen, wodurch jedoch die Leistungsfähigkeit der Tubenfüllmaschine wesentlich reduziert wird.

In einigen Anwendungsgebieten sind die Außenseiten des Tubenkörpers mit Darstellungen bedruckt, deren Farbe sehr empfindlich auf eine übermäßig große Erwärmung reagiert. Es ist in diesem Fall schwierig, einerseits die notwendige Wärmeenergie, die für ein zuverlässiges Verschließen des Tubenkörpers notwendig ist, schnell in das Material des Tubenkörpers einzubringen und andererseits sicherzustellen, dass die Bedruckung auf der Außenseite des Tubenkörpers nicht beschädigt wird.

Dokument WO 2009/105016 A1 offenbart eine Erwärmvorrichtung gemäss dem Oberbegriff des Anspruchs 1.

Der Erfindung liegt die Aufgabe zugrunde, eine Erwärmvorrichtung zum Erwärmen der Ränder der Einfüllöffnung einer aus einem einzelnen rohrförmigen Tubenkörper bestehenden Tube mittels Heißgas zu schaffen, mit der eine ausreichende, jedoch schonende Erwärmung der Wandung des Tubenkörpers innerhalb einer kurzen Zykluszeit unabhängig von der Tubenart oder dem Tubenmaterial gewährleistet ist.

Diese Aufgabe wird erfindungsgemäß durch eine Erwärmvorrichtung mit den Merkmalen des Anspruchs 1 gelöst. Dabei ist vorgesehen, dass die Heißgasdüse zusätzlich einen 2. Düsenabschnitt aufweist, der einen 2. Heißgaskanal mit zumindest einem 2. Heißgasauslass besitzt, der auf der Außenseite der Wandung des Tubenkörpers anordbar ist und mittels dessen Heißgas auf die Außenwandung des Tubenkörpers aufbringbar ist, dass in dem 1. Heißgaskanal und/oder in dem 2. Heißgaskanal eine Durchfluss-Steuervorrichtung angeordnet ist, und dass in dem 1. Heißgaskanal und/oder in dem 2. Heißgaskanal ein Temperatursensor zur Erfassung der Temperatur des im Heißgaskanal strömenden Gases angeordnet ist, wobei der Temperatursensor einen Temperaturwert an eine Auswertevorrichtung gibt, mittels der in Abhängigkeit von den festgestellten Temperaturwerten auf die Durchfluss-Steuervorrichtungen einwirkbar ist.

Erfindungsgemäß wird von der Grundüberlegung ausgegangen, die Wandung des Tubenkörpers sowohl von der Innenseite als auch von der Außenseite direkt mit Heißgas, vorzugsweise Heißluft anzuströmen. Da auf diese Weise die Tubenwandung gleichzeitig von der Innenseite und der Außenseite erwärmt wird, kann wesentlich mehr Wärmeenergie innerhalb der Zykluszeit in die Tubenwandung eingebracht werden, so dass die ausreichende Erwärmung der Tubenwandung gewährleistet ist, mit der ein sicheres Verschließen der Tube in der nachfolgenden Pressstation erreicht wird.

Desweiteren ist vorgesehen, dass in dem 1. Heißgaskanal und/oder in dem 2. Heißgaskanal eine Durchfluss-Steuervorrichtung angeordnet ist. Vorzugsweise besitzt zumindest der 2. Heißgaskanal eine entsprechende Durchfluss-Steuervorrichtung, mit der die Gasmenge, die den 2. Heißgaskanal durchströmt und die außenseitig auf die Tubenwandung aufgebracht wird, verändert werden kann. In einer einfachen Ausgestaltung der Durchfluss-Steuervorrichtung ist vorgesehen, dass der 2. Heißgaskanal wahlweise vollständig geöffnet oder verschlossen wird. Vorzugsweise ist jedoch vorgesehen, dass die Gasströmung in dem 2. Heißgaskanal hinsichtlich der Durchflussmenge zumindest in Stufen verstellbar ist. Besonders bevorzugt ist jedoch, dass die Durchfluss-Steuervorrichtung eine stufenlos verstellbar Absperrvorrichtung aufweist, mit der der Gasdurchfluss und somit die Gasmenge stufenlos verstellbar ist. Bei einer entsprechenden Absperrvorrichtung kann es sich beispielsweise um eine Schieber, eine Blende oder eine stufenlos verstellbare Drossel handeln.

Alternativ oder zusätzlich dazu kann vorgesehen sein, auch in dem 1. Heißgaskanal, durch den das Heißgas auf die Innenwandung des Tubenkörpers aufgebracht wird, eine entsprechende Durchfluss-Steuervorrichtung in oben genannter Ausgestaltung vorzusehen.

In bevorzugter Ausgestaltung der Erfindung ist vorgesehen, dass in dem 1. Heißgaskanal und/oder in dem 2. Heißgaskanal stromab der jeweiligen Durchfluss-Steuervorrichtung ein Kühlgas-Kanal mündet, durch den dem im Heißgaskanal strömenden Heißgas ein kühleres Gas, beispielsweise Umgebungsluft, zumischbar ist. Auf diese Weise kann die Temperatur des Heißgases, die durch die Heißgaskanäle strömt, in einem oder in beiden Heißgaskanälen durch Zumischung eines kühleren Gases auf eine niedrigere Temperatur eingestellt werden, was insbesondere sinnvoll ist, wenn das den Tubenkörper bildende Material eine übermäßige thermische Belastung nicht verträgt oder wenn der Tubenkörper eine temperaturempfindliche Bedruckung trägt.

Vorzugsweise ist in dem Kühlgas-Kanal bzw. in beiden Kühlgas-Kanälen eine verstellbare Absperrvorrichtung angeordnet, bei der es sich um einen stufenlos verstellbaren Schieber oder eine stufenlos verstellbare Drossel handeln kann.

Um die Temperatur der in dem Heißgaskanal bzw. in beiden Heißgaskanälen strömenden Heißgases zu überwachen, ist vorgesehen, dass in dem 1. Heißgaskanal und/oder in dem 2. Heißgaskanal ein Temperatursensor zur Erfassung der Temperatur des im Heißgaskanal strömenden Gases angeordnet ist. Der Temperatursensor gibt einen entsprechenden Temperaturwert an eine Auswertevorrichtung, die in Abhängigkeit von den festgestellten Temperaturwerten auf die Durchfluss-Steuervorrichtungen und gegebenenfalls auf die verstellbaren Absperrvorrichtungen der Kühlgas-Kanäle einwirken kann, um somit eine gewünschte Temperatur des Heißgases einzustellen oder konstant zu halten. Vorzugsweise wird das Heißgas der Heißgasdüse in einen Zuführkanal zugeführt, von dem sowohl der 1. Heißgaskanal als auch der 2. Heißgaskanal ausgehen. Die Ausgestaltung mit einem gemeinsamen Zuführkanal vereinfacht den konstruktiven Aufbau. Es ist jedoch auch möglich, dem 1. Heißgaskanal und dem 2. Heißgaskanal jeweils unabhängige Heißgaszuführungen zuzuordnen, in denen Heißgas unterschiedlicher Temperatur und/oder unterschiedlicher Zusammensetzung zugeführt werden kann.

In Weiterbildung der Erfindung kann vorgesehen sein, dass in dem Zuführkanal eine Heißgas-Durchfluss-Steuervorrichtung angeordnet ist, mit der die Durchflussmenge des Heißgases und somit auch die Strömungsgeschwindigkeit und der Gasdruck eingestellt und verändert werden kann.

Der innere 1. Heißgasauslass kann dem äußeren 2. Heißgasauslass direkt gegenüberliegen, d.h. in Längsrichtung des Tubenkörpers gesehen auf den gleichen Wandungsabschnitt von entgegengesetzten Seiten einwirken. Vorzugsweise ist jedoch vorgesehen, dass der innere 1. Heißgasauslass relativ zum äußeren 2. Heißgasauslass in Längsrichtung des Tubenkörpers um ein geringes Maß von beispielsweise 5mm versetzt angeordnet ist. Auf diese Weise ist die Gefahr, dass die Tubenwandung lokal zu stark erhitzt und beschädigt wird, verringert.

In Weiterbildung der Erfindung kann vorgesehen sein, dass der innere 1. Heißgasauslass unterhalb des äußeren 2. Heißgasauslasses angeordnet ist.

Um kompakte Bauweise der Heißgasdüse zu erreichen, kann erfindungsgemäß vorgesehen sein, dass der innere 1. Düsenabschnitt radial innerhalb des äußeren 2. Düsenabschnitts angeordnet ist bzw. von diesem umgeben ist. Vorzugsweise sitzt der 1. Düsenabschnitt einem inneren 1. Ringkanal, durch den das Heißgas den 1. Heißgasauslass zugeführt wird. Der innere 1. Ringkanal ist mit Abstand von einem äußeren 2. Ringkanal umgeben, der Teil des 2. Heißgaskanals ist und durch den das Heißgas dem äußeren 2. Heißgasauslass zugeführt wird.

Nachdem das Heißgas auf die Wandung des Tubenkörpers eingewirkt hat, wird es in üblicher Weise aus der Heißgasdüse durch einen Abführkanal in definierter Weise abgeführt. Erfindungsgemäß kann dabei vorgesehen sein, dass das aus dem 1. Heißgasauslass austretende Heißgas und das aus dem 2. Heißgasauslass austretende Heißgas mittels eines gemeinsamen Abführkanals abführbar sind. Der Abführkanal kann als Ringkanal ausgebildet sein, der die Heißgasdüse zumindest teilweise umgibt.

Weitere Einzelheiten und Merkmale der Erfindung sind aus der folgenden Beschreibung eines Ausführungsbeispiels unter Bezugnahme auf die Zeichnung ersichtlich. Es zeigen:

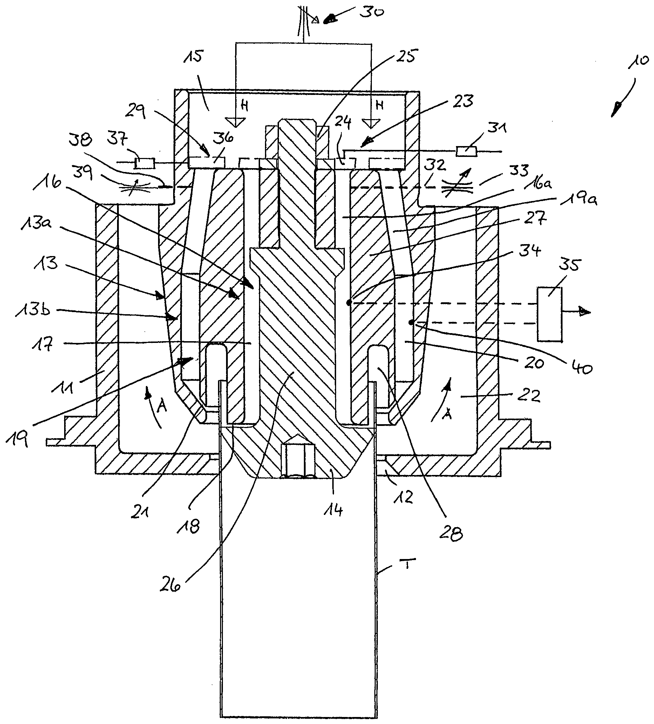

- Fig. 1: Einen vertikalen Schnitt durch eine erfindungsgemäße Erwärmvorrichtung mit teilweise schematischer Darstellung einzelner Bauteile.

Die Figur 1 zeigt eine Erwärmvorrichtung 10, mit der die Ränder einer Einfüllöffnung eines einzelnen aus Kunststoff bestehenden Tubenkörpers T einer Tube mittels Heißgas, beispielsweise Heißluft, erwärmt werden können. Die Erwärmvorrichtung 10 besitzt ein Gehäuse 11, in dem eine untere Einführöffnung 12 ausgebildet ist, deren Weite etwas größer als der Durchmesser des Tubenkörpers T ist. Innerhalb des Gehäuses 11 ist eine Heißgasdüse 13 angeordnet, die einen inneren 1. Düsenabschnitt 13a, der einen 1. Heißgaskanal 16 besitzt und in den Innenraum des Tubenkörpers T einbringbar ist, und einen äußeren 2. Düsenabschnitt 13b aufweist, der einen 2. Heißgaskanal 19 besitzt und auf der Außenseite des Tubenkörpers T anordbar ist. In der Heißgasdüse 13 ist über eine Halterung 25 eine vertikale Haltestange 26 montiert, an deren unterem Ende ein konusförmiges Abschirmelement 14 ausgebildet ist, das in den Innenraum des Tubenkörpers T eintauchen kann und verhindern soll, dass das Heißgas mit einem in dem Tubenkörpers T befindlichen Produkt in Berührung kommt.

Zwischen der Haltestange 26 und einer 1. Zylinderwandung 27 ist ein 1. Ringkanal 17 gebildet, der an seinem oberen Ende über einen 1. Verbindungskanal 16a mit einem Zuführkanal 15 in Verbindung steht, in dem ein Heißgas zugeführt wird, wie es durch die Pfeile H angedeutet ist.

In der nur schematisch dargestellten Zuführleitung für das Heißgas ist eine Heißgas-Durchfluss-Steuervorrichtung 30 beispielsweise in Form einer einstellbaren Drossel angeordnet, mit der sich die Menge des zugeführten Heißgases einstellen und verändern lässt.

Der 1. Verbindungskanal 16a und der 1. Ringkanal 17 sind Teil des 1. Heißgaskanals 16, der an seinem unteren Ende einen im wesentlichen radial nach außen weisenden 1. Heißgasauslass 18 besitzt, der zwischen der Oberseite des Abschirmelementes 14 und der Unterkante der 1. Zylinderwandung 27 gebildet ist.

An der Mündung des 1. Verbindungskanals 16a in den Zuführkanal 15 ist eine 1. Durchfluss-Steuervorrichtung 23 angeordnet, bei der es sich beispielsweise um eine stufenlos verstellbare Absperrvorrichtung 24 in Form eines Schiebers oder einer Drossel handeln kann. Über die Einstellung der 1. Durchfluss-Steuervorrichtung 23 mittels einer nur schematisch dargestellten Betätigungseinrichtung 31 kann ein Benutzer einstellen, welche Heißgasmenge durch den 1. inneren Heißgaskanal 16 strömen soll oder ob der 1. Heißgaskanal 16 vollständig abgesperrt werden soll.

Stromab der 1. Durchfluss-Steuervorrichtung 23 mündet in den 1. Verbindungskanal 16a ein nur schematisch dargestellter 1. Kühlgas-Kanal 32, in dem eine stufenlos verstellbare Absperrvorrichtung 33 beispielsweise in Form eines Schiebers oder einer Drossel angeordnet ist. Über die Einstellung der Absperrvorrichtung 33 kann ein Benutzer einstellen, ob und ggf. in welcher Menge dem im 1. inneren Heißgaskanal 16 störmenden Heißgas ein kühleres Gas, beispielsweise Umgebungsluft, zugemischt werden soll, um somit die Temperatur des Heißgases einzustellen, das über den 1. inneren Heißgasauslass 18 auf der Innenseite der Wandung des Tubenkörpers T auf diese aufgebracht wird.

In dem 1. inneren Heißgaskanal 16 ist darüber ein 1. Temperatursensor 34 angeordnet, der in nur schematisch dargestellter Weise mit einer Auswerteeinheit 35 verbunden ist. Der 1. Temperatursensor 34 erfasst die Temperatur des im 1. inneren Heißgaskanal 16 strömenden Heißgases und gibt ein entsprechendes Signal an die Auswerteeinheit 35. Die Auswerteeinheit 35 kann in Abhängigkeit von den ermittelten Messwerten die Stellung der Heißgas-Durchfluss-Steuervorrichtung 30 und/oder der 1. Durchfluss-Steuervorrichtung 23 und/oder der Absperrvorrichtung 33 des 1. Kühlgas-Kanals 32 einstellen bzw. verändern.

Mit Abstand radial außerhalb des 1. Ringkanals 17 ist ein 2. Ringkanal 20 ausgebildet, der über einen 2. Verbindungskanal 19a mit dem Zuführkanal 15 in Verbindung steht. Der 2. Verbindungskanal 19a und der 2. Ringkanal 20 sind Teil des äußeren 2. Heißgaskanals 19, der an seinem unteren Ende einen 2. Heißgasauslass 21 aufweist, aus dem eine radial nach innen gerichtete Heißgasströmung austritt.

Die austretende Heißgasströmung kann eine radiale und/oder tangentiale und/oder axiale, d.h. nach unten in den Innenraum des Tubenkörpers T gerichtete Komponente aufweisen.

Wie in der Figur 1 ersichtlich ist, ist das Ende des eingesetzten Tubenkörpers T zwischen dem 1. Heißgasauslass 18 und dem 2. Heißgasauslass 21 angeordnet, so dass das aus dem 1. Heißgasauslass 18 austretende Heißgas auf die Innenwandung des Tubenkörpers T und das aus dem 2. Heißgasauslass 21 austretende Heißgas auf die Außenwandung des Tubenkörpers T auftritt, wobei der 1. Heißgas-auslass 18 und der 2. Heißgasauslass 21 so in Längsrichtung des Tubenkörpers T versetzt angeordnet sind, dass der 1. Heißgas-auslass 18 um ein geringes Maß unterhalb des 2. Heißgasauslasses 21 angeordnet ist.

An der Mündung des 2. Verbindungskanals 19a in den Zuführkanal 15 ist eine 2. Durchfluss-Steuervorrichtung 29 angeordnet, bei der es sich beispielsweise um eine stufenlos verstellbare Absperrvorrichtung 36 in Form eines Schiebers oder einer Drossel handeln kann. Über die Einstellung der 2. Durchfluss-Steuervorrichtung 29 mittels einer nur schematisch dargestellten Betätigungseinrichtung 37 kann ein Benutzer einstellen, welche Heißgasmenge durch den 2. äußeren Heißgaskanal 19 strömen soll oder ob der 2. Heißgaskanal 19 vollständig abgesperrt werden soll.

Stromab der 2. Durchfluss-Steuervorrichtung 29 mündet in den 2. Verbindungskanal 19a ein nur schematisch dargestellter. Kühlgas-Kanal 38, in dem eine stufenlos verstellbare Absperrvorrichtung 39 beispielsweise in Form eines Schiebers oder einer Drossel angeordnet ist. Über die Einstellung der Absperrvorrichtung 39 kann ein Benutzer einstellen, ob und ggf. in welcher Menge dem im 2. äußeren Heißgaskanal 19 störmenden Heißgas ein kühleres Gas, beispielsweise Umgebungsluft, zugemischt werden soll, um somit die Temperatur des Heißgases einzustellen, das über den 2. äußeren Heißgasauslass 21 auf der Innenseite der Wandung des Tubenkörpers T auf diese aufgebracht wird.

In dem 2. äußeren Heißgaskanal 19 ist darüber hinaus ein 2. Temperatursensor 40 angeordnet, der in nur schematisch dargestellter Weise mit der Auswerteeinheit 35 verbunden ist. Der 2. Temperatursensor 40 erfasst die Temperatur des im 2. äußeren Heißgaskanal 19 strömenden Heißgases und gibt ein entsprechendes Signal an die Auswerteeinheit 35. Die Auswerteeinheit 35 kann in Abhängigkeit von den ermittelten Messwerten die Stellung der Heißgas-Durchfluss-Steuervorrichtung 30 und/oder der 2. Durchfluss-Steuervorrichtung 29 und/oder der Absperrvorrichtung 39 des 2. Kühlgas-Kanals 30 einstellen bzw. verändern.

Radial außenseitig des 2. Ringkanals 20 ist ein ebenfalls als Ringkanal ausgebildeter Abführkanal 22 angeordnet, durch den das Heißgas nach Einwirkung auf die Wandung des Tubenkörpers T abgeführt werden kann, wie es durch die Pfeile A angedeutet ist.

Um die Wandung eines Tubenkörpers zu erwärmen, wird dieser zunächst mit seinem oberen offenen Ende von unten durch die Einführöffnung 12 des Gehäuses 11 eingeführt und zwischen dem 1. Heißgasauslass 18 und dem 2. Heißgasauslass 21 angeordnet, wobei das kegelförmige Abschirmelement 14, das in den Tubenkörper T eintaucht, der Ausrichtung des Tubenkörpers T dient. Anschließend wird das Heißgas durch den 1. Heißgaskanal 16 und den 1. Heißgasauslass 18 auf die Innenseite der Wandung des Tubenkörpers T aufgebracht. Das Heißgas strömt dann zwischen der Wandung des Tubenkörpers T und der 1. Zylinderwandung 27 nach oben in einen Verbindungskanal 28, umströmt das obere Ende des Tubenkörpers T und gelangt in den Abführkanal 22 und wird aus diesem abgeführt (Pfeile A).

Gleichzeitig gelangt das Heißgas bei zumindest teilweise geöffneter Absperrvorrichtung 36 in den 2. Heißgaskanal 19 und tritt an dessen 2. Heißgasauslass 21 aus und beaufschlagt die Außenseite der Wandung des Tubenkörpers T und erwärmt diese. Das Heißgas gelangt unmittelbar in den Abführkanal 22 und wird aus diesem abgeführt.

Die Tubenkörper T wird anschließend nach unten aus der Erwärmvorrichtung herausgenommen und in einer nachfolgenden Pressstation in üblicher Weise verschlossen.

## Patentansprüche

1. Erwärmvorrichtung (10) zum Erwärmen der Ränder der Einfüllöffnung einer aus einem einzelnen rohrförmigen Tubenkörper (T) bestehenden Tube mittels Heißgas, mit einer Heißgasdüse (13), die einen in einen Innenraum des Tubenkörpers (T) einbringbaren 1. Düsenabschnitt (13a) aufweist, der einen 1. Heißgaskanal (16) mit zumindest einem 1. Heißgasauslass (18) besitzt, der innerhalb des Innenraums des Tubenkörpers (T) anordbar ist und mittels dessen Heißgas auf die Innenwandung des Tubenkörpers (T) aufbringbar ist, wobei die Heißgasdüse (13) einen 2. Düsenabschnitt (13b) aufweist, der einen 2. Heißgaskanal (19) mit zumindest einem 2. Heißgasauslass (21) besitzt, der auf der Außenseite der Wandung des Tubenkörpers (T) anordbar ist und mittels dessen Heißgas auf die Außenwandung des Tubenkörpers (T) aufbringbar ist, und wobei in dem 1. Heißgaskanal (16) und/oder in dem 2. Heißgaskanal (19) eine Durchfluss-Steuervorrichtung (23, 29) angeordnet ist, **dadurch gekennzeichnet, dass** in dem 1. Heißgaskanal (16) und/oder in dem 2. Heißgaskanal (19) ein Temperatursensor (34, 40) zur Erfassung der Temperatur des im Heißgaskanal (16, 19) strömenden Gases angeordnet ist, wobei der Temperatursensor (34, 40) einen Temperaturwert an eine Auswertevorrichtung (35) gibt, mittels der in Abhängigkeit von den festgestellten Temperaturwerten auf die Durchfluss-Steuervorrichtungen (23, 29) einwirkbar ist.

2. Erwärmvorrichtung nach Anspruch 1, **dadurch gekennzeichnet, dass** die Durchfluss-Steuervorrichtung (23, 29) eine stufenlose verstellbare Absperrvorrichtung (24, 36) aufweist.

3. Erwärmvorrichtung nach Anspruch 1 oder 2, **dadurch gekennzeichnet, dass** in dem 1. Heißgaskanal (16) und/oder in dem 2. Heißgaskanal (19) stromab der Durchfluss-Steuervorrichtung (23, 29) ein Kühlgas-Kanal (32, 38) mündet, durch den dem im Heißgaskanal (16, 19) strömenden Heißgas ein kühleres Gas zumischbar ist.

4. Erwärmvorrichtung nach Anspruch 3, **dadurch gekennzeichnet, dass** in dem Kühlgas-Kanal (32, 38) eine verstellbare Absperrvorrichtung (33, 39) angeordnet ist.

5. Erwärmvorrichtung nach einem der Ansprüche 1 bis 4, **dadurch gekennzeichnet, dass** der 1. Heißgaskanal (16) und der 2. Heißgaskanal (19) mit einem gemeinsamen Zuführkanal (15) in Verbindung stehen, in dem das Heißgas zuführbar ist.

6. Erwärmvorrichtung nach Anspruch 5, **dadurch gekennzeichnet, dass** in dem Zuführkanal (15) eine Heißgas-Durchfluss-Steuervorrichtung (30) angeordnet ist.

7. Erwärmvorrichtung nach einem der Ansprüche 1 bis 6, **dadurch gekennzeichnet, dass** der 1. Heißgasauslass (18) relativ zum 2. Heißgasauslass (21) in Längsrichtung des Tubenkörpers (T) versetzt angeordnet ist.

8. Erwärmvorrichtung nach Anspruch 7, **dadurch gekennzeichnet, dass** der 1. Heißgasauslass (18) unterhalb des 2. Heißgasauslasses (21) angeordnet ist.

9. Erwärmvorrichtung nach einem der Ansprüche 1 bis 8, **dadurch gekennzeichnet, dass** der 1. Düsenabschnitt (13a) radial innerhalb des 2. Düsenabschnitts (13b) angeordnet ist.

10. Erwärmvorrichtung nach einem der Ansprüche 1 bis 9, **dadurch gekennzeichnet, dass** das aus dem 1. Heißgasauslass (18) austretende Heißgas und das aus dem 2. Heißgasauslass (21) austretende Heißgas mittels eines gemeinsamen Abführkanals (22) abführbar sind.

11. Erwärmvorrichtung nach Anspruch 10, **dadurch gekennzeichnet, dass** der Abführkanal (22) die Heißgasdüse (13) zumindest teilweise umgibt.

## Claims

1. Heating device (10) for heating the edges of a filling opening of a tube comprising an individual tubular tube body (T) by means of hot gas, with a hot gas nozzle (13), which has a first nozzle section (13a), which can be inserted into an inner space of said tube body (T) and which has a first hot gas duct (16) with at least one first hot gas outlet (18), which can be arranged within the inner space of said tube body (T), and by means of which hot gas can be sent to the inner wall of said tube body (T), wherein said hot gas duct (13) has a second nozzle section (13b), which has a second hot gas duct (19) with at least one second hot gas outlet (21), which can be arranged on the outside of the wall of said tube body (T) and by means of which hot gas can be sent to the outer wall of said tube body (T), and wherein a flow control device (23, 29) is arranged in said first hot gas duct (16) and/or in said second hot gas duct (19), **characterized in that** a temperature sensor (34, 40) for detecting the temperature of the gas flowing in said hot gas duct (16, 19) is arranged in said first hot gas duct (16) and/or in said second hot gas duct (19), wherein said temperature sensor (34, 40) sends a temperature value to an analyzing device (35) which can act on said flow control devices (23, 29) as a function of the detected temperature values.

2. Heating device in accordance with claim 1, **characterized in** said the flow control device (23, 29) has a continuously adjustable blocking device (24, 36).

3. Heating device in accordance with claim 1 or 2, **characterized in that** a cooling gas duct (32, 38), through which a cooler gas can be added to the hot gas flowing in said hot gas duct (16, 19), opens in said first hot gas duct (16) and/or in said second hot gas duct (19) downstream of said flow control device (23, 29) .

4. Heating device in accordance with claim 3, **characterized in that** an adjustable blocking device (33, 39) is arranged in said cooling gas duct (32, 38).

5. Heating device in accordance with one of the claims 1 through 4, **characterized in that** said first hot gas duct (16) and said second hot gas duct (19) are in connection with a common feed duct (15), in which the hot gas can be fed.

6. Heating device in accordance with claim 5, **characterized in that** a hot gas flow control device (30) is arranged in said feed duct (15).

7. Heating device in accordance with one of the claims 1 through 6, **characterized in that** said first hot gas outlet (18) is arranged offset in the longitudinal direction of said tube body (T) in relation to said second hot gas outlet (21).

8. Heating device in accordance with claim 7, **characterized in that** said first hot gas outlet (18) is arranged under said second hot gas outlet (21).

9. Heating device in accordance with one of the claims 1 through 8, **characterized in that** said first nozzle section (13a) is arranged radially within said second nozzle section (13b).

10. Heating device in accordance with one of the claims 1 through 9, **characterized in that** the hot gas leaving said first hot gas outlet (18) and the hot gas leaving said second hot gas outlet (21) can be removed by means of a common discharge duct (22).

11. Heating device in accordance with claim 10, **characterized in that** said discharge duct (22) at least partially surrounds said hot gas nozzle (13).

## Revendications

1. Dispositif de chauffage (10) pour chauffer les bords de l'orifice de remplissage d'un tube composé d'un corps de tube (T) individuel en forme de tube à l'aide de gaz chaud, avec une buse de gaz chaud (13) comportant une 1^{re} section de buse (13a) pouvant être amenée dans un espace intérieur du corps de tube (T), possédant un 1^{er} canal de gaz chaud (16) doté d'au moins une 1^{re} sortie de gaz chaud (18) pouvant être disposée à l'intérieur de l'espace intérieur du corps de tube (T) et à l'aide de laquelle du gaz chaud peut être appliqué sur la paroi intérieure du corps de tube (T), la buse de gaz chaud (13) comportant une 2^{e} section de buse (13b) possédant un 2^{e} canal de gaz chaud (19) doté d'au moins une 2^{e} sortie de gaz chaud (21) disposée sur le côté extérieur de la paroi du corps de tube (T) et à l'aide de laquelle du gaz chaud peut être appliqué sur la paroi extérieure du corps de tube (T) et un dispositif de commande de débit (23, 29) étant disposé dans le 1^{er} canal de gaz chaud (16) et/ou dans le 2^{e} canal de gaz chaud (19), **caractérisé en ce qu'**un capteur de température (34, 40) est disposé dans le 1^{er} canal de gaz chaud (16) et/ou dans le 2^{e} canal de gaz chaud (19) en vue de détecter la température du gaz circulant dans le canal de gaz chaud (16, 19), le capteur de température (34, 40) transmettant une valeur de température à un dispositif d'analyse (35) à l'aide duquel il est possible d'avoir une action sur les dispositifs de commande de débit (23, 29) en fonction des valeurs de température détectées.

2. Dispositif de chauffage selon la revendication 1, **caractérisé en ce que** le dispositif de commande de débit (23, 29) comporte un dispositif d'arrêt (24, 36) réglable en continu.

3. Dispositif de chauffage selon la revendication 1 ou 2, **caractérisé en ce qu'**un canal de gaz de refroidissement (32, 38) débouche dans le 1^{er} canal de gaz chaud (16) et/ou dans le 2^{e} canal de gaz chaud (19) en aval du dispositif de commande de débit (23, 29), un gaz plus froid pouvant être mélangé au gaz chaud circulant dans le canal de gaz chaud (16, 19) au travers dudit canal.

4. Dispositif de chauffage selon la revendication 3, **caractérisé en ce qu'**un dispositif d'arrêt (33, 39) réglable est disposé dans le canal de gaz de refroidissement (32, 38).

5. Dispositif de chauffage selon l'une quelconque des revendications 1 à 4, **caractérisé en ce que** le 1^{er} canal de gaz chaud (16) et le 2^{e} canal de gaz chaud (19) sont reliés à un canal d'alimentation (15) commun dans lequel le gaz chaud peut être amené.

6. Dispositif de chauffage selon la revendication 5, **caractérisé en ce qu'**un dispositif de commande de débit de gaz chaud (30) est disposé dans le canal d'alimentation (15).

7. Dispositif de chauffage selon l'une quelconque des revendications 1 à 6, **caractérisé en ce que** la 1^{re} sortie de gaz chaud (18) est disposée de façon décalée par rapport à la 2^{e} sortie de gaz chaud (21) dans la direction longitudinale du corps de tube (T).

8. Dispositif de chauffage selon la revendication 7, **caractérisé en ce que** la 1^{re} sortie de gaz chaud (18) est disposée en dessous de la 2^{e} sortie de gaz chaud (21).

9. Dispositif de chauffage selon l'une quelconque des revendications 1 à 8, **caractérisé en ce que** la 1^{re} section de buse (13a) est disposée dans le plan radial à l'intérieur de la 2^{e} section de buse (13b).

10. Dispositif de chauffage selon l'une quelconque des revendications 1 à 9, **caractérisé en ce que** le gaz chaud sortant de la 1^{re} sortie de gaz chaud (18) et le gaz chaud sortant de la 2^{e} sortie de gaz chaud (21) peuvent être évacués à l'aide d'un canal d'évacuation (22) commun.

11. Dispositif de chauffage selon la revendication 10, **caractérisé en ce que** le canal d'évacuation (22) entoure au moins en partie la buse de gaz chaud (13).
